# EUROPÄISCHE PATENTSCHRIFT

(11) **EP 0 320 925 B1**
(45) Veröffentlichungstag und Bekanntmachung des Hinweises auf die Patenterteilung: **03.03.1993**
(21) Anmeldenummer: 88120940.7
(22) Anmeldetag: 14.12.1988
(51) Int. Cl.: B29C 45/14

(54) **Herstellverfahren für Kunststoff-Formteile mit dekorativ-geprägter Oberflächenbeschichtung**
Method for manufacturing plastic mouldings with a decoratively embossed surface coating
Procédé de fabrication de pièces moulées en matière plastique à revêtement de surface à estampage décoratif

(30) Priorität: 15.12.1987 DE 3742457
(43) Veröffentlichungstag der Anmeldung: 21.06.1989
(73) Patentinhaber: Bayerische Motoren Werke Aktiengesellschaft, 80788 München (DE); Dynamit Nobel Aktiengesellschaft, 53839 Troisdorf (DE)
(72) Erfinder: Fries, Bernd, D-8832 Weissenburg (DE); Siegemund, Eckard, Dr. Ing., D-8000 München 19 (DE)

(56) Entgegenhaltungen:
- CH-A- 644 057
- DE-A- 1 729 168
- FR-A- 2 297 707
- US-A- 3 654 062
- US-A- 4 075 266
- PATENT ABSTRACTS OF JAPAN, Band 6, Nr. 26 (M-112)[904], 16. Februar 1982; & JP-A-56 144 137 (SANPOU JIYUSHI KOGYO K.K.) 10-11-1981
- PATENT ABSTRCTS OF JAPAN, Band 10, Nr. 326 (M-532)[2382]. 6. November 1986; & JP-A-61 132 314 (TOYOTA MOTOR CORP.) 19-06-1986
- PATENT ABSTRACTS OF JAPAN, Band 4, Nr. 167 (M-42)[649], 19. November 1980; & JP-A-55 117 618 (YOSHIDA KOGYO K.K.) 10-09-1980
- PATENT ABSTRACTS OF JAPAN, Band 11, Nr. 269 (M-621)[2716], 2. September 1987; & JP-A-62 71 618 (TOYOTA TEKKO K.K.) 02-04-1987
- PATENT ABSTRACTS OF JAPAN, Band 8, Nr. 195 (M-323)[1632], 7. September 1984; & JP-A-59 83 633 (SUMITOMO KAGAKU KOGYO K.K.) 15-05-1984
- Kunstoffverarbeitung, Dr. Schwarz, Vogel-Buchverlag

## Beschreibung

Die Erfindung betrifft ein Verfahren zur Herstellung von Kunststofformteilen mit einer eine dekorative Oberflächenstrukturierung aufweisenden Oberflächenbeschichtung entsprechend dem Anspruch 1.

Derartige Formteile sind zum Beispiel als Innenverkleidungen in Kraftfahrzeugen, wie zum Beispiel Armaturenbretter oder Türinnenverkleidungen, bekannt. Bei einem üblichen Herstellungsverfahren wird zunächst im Spritzgußverfahren ein Formteil aus einem thermoplastischen Kunststoff hergestellt, das anschließend mit einer oberflächenstrukturierten Folie, die ggf. vorher tiefgezogen werden muß, kaschiert wird.

Dieses bekannte Verfahren zur Herstellung von Formteilen mit oberflächenstrukturierter, d. h. genarbter Oberflächenbeschichtung ist - bedingt durch die Vielzahl der Verfahrensschritte - aufwendig und teuer. Zudem stellt sich während des Tiefziehens der oberflächenstrukturierten Folie sowie beim anschließenden Kaschieren des separat hergestellten Spritzgußformteils die Oberflächenstrukturierung der Folie teilweise wieder zurück. Schließlich wird beim Tiefziehen durch die flächige Streckung die Prägung deformiert, so daß eine unbefriedigende, zum Teil auch ungleichmäßige Oberflächenstrukturierung entsteht.

Aus der gattungsbildenden JP-A 59-83 633 ist es bekannt, zum Herstellen eines Formteils eine vorgeformte Folie in ein Formwerkzeug einzulegen. Die Form der Folie ist hierbei der Kontur des Formhohlraumes im Formwerkzeug angepaßt. Zumindest ein Teilbereich des Formwerkzeuges ist auf seiner Innenoberfläche mit einer Oberflächenstrukturierung, beispielsweise einer Narbung, versehen. Sodann wird die eingelegte Folie auf ihrer Rückseite mit einem Kunststoff hinterspritzt, wodurch sich die Folie an die Innenoberfläche des Formwerkzeuges anlegt und dadurch die Oberflächenstrukturierung erhält.

Nachteilig ist es hierbei, daß die Folie vorgeformt werden muß, was einen separaten Arbeitsgang erfordert und damit kostenaufwendig ist.

Der Erfindung liegt die Aufgabe zugrunde, das gattungsgemäße Verfahren zu vereinfachen.

Gelöst wird diese Aufgabe durch die Merkmale des Anspruchs 1. Wie sich hier überraschend gezeigt hat, ist auf diese Weise neben dem Erzielen einer einwandfreien Narbung der Oberflächenbeschichtung gleichzeitig in einem Arbeitsgang ein Tiefziehen der Oberflächenfolie möglich. Dadurch kann das Formteil in einem Arbeitsgang vollständig hergestellt werden. Durch die Erwärmung der Formteilhälfe mit der Obeflächenstrukturierung wird die dauerhafte Ausformung der Narbung unterstützt.

Aus der US-A 3,654,062 ist es bekannt, zum Herstellen eines Formteils mit einer dekorativen Oberfläche eine mehrschichtige, verformbare Folie vorzusehen, die in ein Formwerkzeug eingelegt wird. Sodann wird die Folie auf ihrer Rückseite mit einem Kunststoff mit Drücken von 70 bis 140 bar hinterspritzt. Dadurch verformt sich die Folie und schmiegt sich der Kontur des Formwerkzeuges an. Sowohl die Folie als auch der Kunststoff sind auf ABS-Basis aufgebaut.

Mit diesem Verfahren ist es möglich, geprägte Formteile in einem Arbeitsschritt zu erhalten. Jedoch ist zum einen das Vorsehen einer Metallfolie innerhalb der mehrschichtigen Oberflächenfolie notwendig und zum anderen können hiermit keine Oberflächenstrukturierungen im Sinne von Narbungen erzielt werden.

Die spätere dekorativ genarbte Oberflächenbeschichtung wird durch Einsatz einer zunächst glatten Folie aus tiefziehfähigem Material, also insbesondere aus thermoplastischen Kunststoff, erzielt. Bevorzugt wird eine Folie aus PVC - mit oder ohne Weichmacher - aus ABS (Acrylnitril-Butadien-Styrol) oder aus einer Mischung von PVC mit ABS eingesetzt. Es können jedoch auch andere, dem Fachmann im einzelnen geläufigen Materialien eingesetzt werden, die als Oberflächenbeschichtung bekannt sind. Die Dicke der Folie beträgt etwa 0,2 bis 1,5 mm, bevorzugt 0,5 bis 1 mm.

Die zunächst ungeprägte Folie kann in ihrer Form der Oberflächenkontur des Formteilwerkzeugs durchs Tiefziehen angepaßt sein, es können jedoch bevorzugt auch ebene Zuschnitte einer Folie eingesetzt werden. Um während des Einspritzens des thermoplastischen Kernmaterials ein unerwünschtes Hinterfließen der Folie auszuschließen, wird die Folie bevorzugt in der Trennebene des Formteilwerkzeugs eingespannt, zum Beispiel mittels Vakuumansaugung und/oder mechanischen Klemmeinrichtungen. Während des Einspritzens des thermoplastischen Kunststoffs für das Kernmaterial des Formteils wird die in das Formteilwerkzeug eingelegte Folie an die Innenwandung des Formteilwerkzeuges angepreßt. Bedingt durch die in der Spritzgußmasse für das Kernmaterial vorhandene Schmelzwärme und bevorzugt durch zusätzliches, ggf. partielles Beheizen des Formteilwerkzeuges wird die Folie auf eine Temperatur oberhalb der Verformungstemperatur (Erweichungstemperatur) erwärmt, so daß das Prägemuster der Formteilwerkzeugoberfläche auf die Folie übertragen wird.

Als besonders vorteilhaft hat sich die Kombination der Maßnahmen gemäß den Ansprüchen 1 und 2 erwiesen, da hier zusätzlich eine besonders gleichmäßige Druckverteilung während der Abkühlphase im gesamten Verbindungsbereich zwischen dem Formteil und der Folie vorliegt. Dementsprechend wird auch eine besonders exakte Übertragung der Oberflächenstruktur des Formteilwerkzeuges auf die Folie insbesondere auch bei großen oder sehr großen Formteilen wie Innenverkleidungen in Kraftfahrzeugen erreicht. Das an sich bekannte Verfahren gemäß Anspruch 2 ist beispielsweise in der DE-OS 2501314 beschrieben. Der für die erfindungsgemäße Erzeugung der gewünschten Oberflächenstrukturierung notwendige Innendruck im Formteilwerkzeug nach dem Einspritzen des thermoplastischen Kunststoffs für das Kernmaterial beträgt bei diesem bekannten Verfahren etwa 10 bis 130 bar. Bevorzugt kann bei der erfindungsgemäßen Anwendung ein Druck von etwa 50 bis 100 bar vorgesehen werden. Damit wird nur ein Bruchteil des beim herkömmlichen Spritzgießen üblichen Drucks im Formteilwerkzeug erreicht.

Bevorzugt weist der thermoplastische Kunststoff der tiefziehfähigen Folie eine Schmelztemperatur auf, die höher ist als die Temperatur des thermoplastischen Kunststoffs für das Kernmaterial des Formteils bei dessen Einspritzen in das Formteilwerkzeug. Hierdurch wird erreicht, daß die spätere Oberflächenfolie in ihrem vom Formteil abgewandten Bereich zwar ausreichend erweicht, aber nicht örtlich aufschmilzt und von dem schmelzflüssigen Kernmaterial zerstört wird.

Nach einer weiteren besonders bevorzugten Ausführungsform der Erfindung wird als Folie für die Oberflächenbeschichtung eine einseitig mit einem Schaumstoff kaschierte Folie verwendet. Solange sichergestellt ist, daß der Schaumstoff beim Einspritzvorgang bzw. in der anschließenden Druckphase nicht dauerhaft geschädigt wird, stellt sich der Schaumstoff nach dem Entformen des Formteils wieder weitgehend oder vollständig zurück. Als Schaumstoff hat sich insbesondere ein solcher auf der Basis von Weich-Polyurethan bewährt, der bei den relativ geringen Drücken des erfindungsgemäßen Verfahrens von bevorzugt 50 bis 100 bar nicht geschädigt wird, solange für das Kernmaterial ein thermoplastischer Kunststoff mit niedriger Schmelztemperatur, wie z.B. Polyethylen verwendet wird. Der Schaumstoff sollte geschlossenzellig sein und/oder eine Oberflächenverhautung aufweisen, um ein Eindringen des schmelzflüssigen Kernmaterials in die Zellen des Schaumstoffs und damit dessen Verhärtung zu verhindern.

Als Kernmaterial wird bevorzugt ein thermoplastischer Kunststoff auf der Basis von Polypropylen und/oder ABS verwendet. Wesentliche Vorteile des erfindungsgemäßen Verfahrens sind:
1. kostengünstige, einfache Verfahrensweise durch Fortfall der separaten Narbung der Oberflächenfolie;
2. Fortfall jeglicher Klebstoffe oder ähnliches; ggf. kann die Oberflächenfolie jedoch zur Erhöhung der Haftfestigkeit mit einem Haftvermittler versehen sein;
3. hohe Verbundfestigkeit der Oberflächenbeschichtung mit dem Kernmaterial;
4. freie Wahl der Oberflächenprägung auch an komplizierten, nicht ebenen Oberflächen, ggf. auch Differenzierung der Oberflächenprägung an verschiedenen Stellen der Oberfläche;
5. einwandfreie Oberflächenbeschichtung, d.h. keine Faltenbildung, Durchbrüche oder dgl., mit definierter Narbung.

Die Erfindung wird im folgenden anhand eines Ausführungsbeispiels in der Zeichnung näher erläutert. Es zeigen dabei
- Figur 1: ein zweiteiliges Formteilwerkzeug nach dem Einspritzen des Kernmaterials,
- Figur 2: eine schematische Darstellung der einzelnen Verfahrensabläufe in vier Teilzeichnungen.

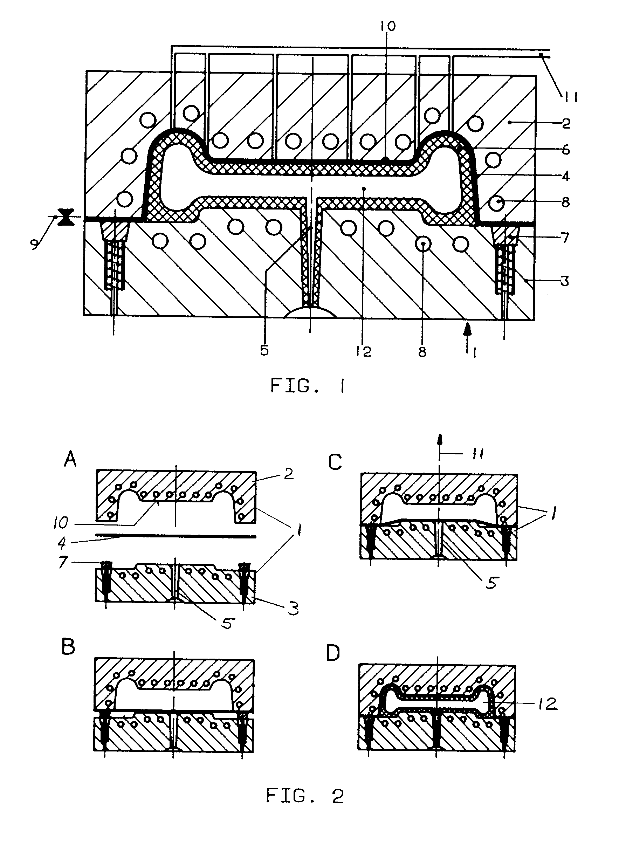

In Figur 1 ist ein zweiteiliges Formteilwerkzeug 1 zur Herstellung einer Ablageplatte mit umlaufenden Rand für einen PKW dargestellt. Die fertige Ablageplatte besteht dabei aus einem hohlen Kern 6 aus ABS, der einseitig mit

einer genarbten Oberflächenfolie 4 aus einem PVC-ABS-Blend überzogen ist.

Gemäß Figur 2 A wird zunächst ein ebener Zuschnitt 4 einer ungenarbten, d.h. glatten Folie einer Dicke von 0,8 mm in das geöffnete Formteilwerkzeug 1 eingelegt und durch die Spannleisten 7 fixiert (Figur 2 B). Nach einer alternativen Ausführungsform der Erfindung wird der ebene Zuschnitt der Oberflächenfolie 4 zunächst tiefgezogen und dann in das Formteilwerkzeug 1 eingelegt.

Nach dem Schließen des Formteilwerkzeugs 1 wird das Kernmaterial 6 - im dargestellten Ausführungsbeispiel wird ein ABS-Material verwendet - in den Werkzeughohlraum 12 eingespritzt. Gleichzeitig wird durch die Vakuumabsaugung 11 das Tiefziehen der Folie 4 unterstützt. Zusammen mit dem Einspritzen des schmelzflüssigen Kernmaterials 6 wird ein Inertgas, im Ausführungsbeispiel Stickstoff, in den Formteilhohlraum 12 injiziert. Das Inertgas kann dabei durch den Angußkanal 5 oder ggf. durch eine oder mehrere in den Formwerkzeug-Hohlraum ragende Injektionsnadeln in das schmelzflüssige Kernmaterial 6 injiziert werden.

Das gesamte Volumen des eingespritzten Kernmaterials 6 beträgt etwa 20 bis 95 % des Formwerkzeug-Hohlraumes, so daß das hergestellte Formteil als Hohlkörper ausgebildet wird.

Beim Einspritzen des Kernmaterials 6 drückt dieses die Folie 4 gegen die mit einem Narbungsmuster versehene Innenoberfläche 10 der oberen Werkzeughälfte 2. Durch die Schmelzwärme des Kernmaterials 6 wird die Folie 4 kurzzeitig bis zu der zum Oberflächenstrukturieren notwendigen Temperatur aufgeheizt, so daß eine dauerhafte Übertragung der Oberflächenstruktur 10 der oberen Werkzeug hälfte 2 auf die Folie 4 gewährleistet ist. Zusätzlich wird durch die Kühlkanäle 8 kurzzeitig die obere Werkzeughälfte 2 aufgeheizt.

Nach dem Einspritzen des Kernmaterials 6 wird der Druck im Werkzeughohlraum in Höhe von 70 bar für das dargestellte Ausführungsbeispiel der Erfindung für ca. 1 Minute aufrechterhalten. Während dieser Zeit werden die obere Werkzeughälfte 2 und die untere Werkzeughälfte 3 durch Einleiten eines Kühlmediums in die Kühlkanäle 8 gekühlt. Nach vollständiger Erstarrung des Kernmaterials 6 wird ggf. der Gasüberdruck aus dem Hohlraum 12 abgelassen und das Formteil entformt.

Das fertige Formteil weist an seiner Oberfläche eine gleichmäßige Strukturierung auf, die exakt der Oberflächenstruktur der inneren Oberfläche 10 der oberen Werkzeughälfte 2 entspricht. Die so strukturierte Oberflächenfolie 4 ist haftfest mit dem Kernmaterial 6 verbunden.

Durch das erfindungsgemäße Verfahren ist es überraschend einfach möglich, Spritzgußteile mit einwandfrei genarbter dekorativer Oberflächenbeschichtung herzustellen, die vielfältig eingesetzt werden können.

### Legende

- 1: Formteilwerkzeug
- 2: Werkzeugoberteil
- 3: Werkzeugunterteil
- 4: Oberflächenfolie
- 5: Angußkanal
- 6: Kernmaterial
- 7: Spannleisten
- 8: Kühlkanäle
- 9: Trennebene
- 10: Genarbte Oberfläche
- 11: Vakuumabsaugung
- 12: Hohlraum

## Patentansprüche

1. Herstellverfahren für Kunststofformteile mit einer eine dekorative Oberflächenstruktur aufweisenden Oberflächenbeschichtung, wobei die Formteile mit einer Folie überzogen werden, indem eine ungeprägte, tiefziehfähige Folie in ein Formteilwerkzeug eingelegt wird, das mindestens auf Teilbereichen seiner Innenoberfläche eine Oberflächenstrukturie-rung aufweist, und ein fließfähiger Kunststoff in das Formteilwerkzeug eingebracht wird, wodurch die Folie gegen die oberflächenstrukturierte Formteilwerkzeugbereiche gepreßt wird,
dadurch gekennzeichnet, daß diese Teilbereiche vor dem Einbringen des fließfähigen Kunststoffs erwärmt werden, bevorzugt auf eine Temperatur, die über der Erweichungstemperatur der Folie liegt, und daß anschließend der fließfähige Kunststoff mit einem Druck von etwa 10 bis 130 bar, bevorzugt etwa 50 bis 100 bar, eingebracht wird, wodurch die Folie tiefgezogen wird.

2. Verfahren nach Anspruch 1,
dadurch gekennzeichnet, daß gleichzeitig oder im Anschluß an das Einspritzen des aufgeschmolzenen thermoplastischen Kunststoffs (6) ein Gas in die Kunststoffschmelze (6) eingebracht wird und daß der Druck im Formteil solange aufrechterhalten wird, bis der Kunststoff (6) selbsttragend verfestigt ist.

3. Verfahren nach Anspruch 1 oder 2,
dadurch gekennzeichnet, daß die ungeprägte Folie (4) aus einem thermoplastischen Kunststoff auf der Basis von PVC und/oder ABS besteht.

4. Verfahren nach einem der Ansprüche 1 bis 3,
dadurch gekennzeichnet, daß als thermoplastischer Kunststoff (6) zum Einspritzen in das Formteilwerkzeug (1) ein thermoplastischer Kunststoff auf der Basis von Polypropylen und/oder ABS verwendet wird.

5. Verfahren nach einem der Ansprüche 1 bis 5,
dadurch gekennzeichnet, daß die ungeprägte Folie (4) auf der dem Kunststoff (6) zugewandten Seite mit einer Schaumstoffkaschierung versehen ist, wobei die Erweichungstemperatur des Schaumstoffs höher liegt als die Einspritztemperatur des aufgeschmolzenen thermoplastischen Kunststoffs (6).

6. Verfahren nach einem der Ansprüche 1 bis 6,
dadurch gekennzeichnet, daß die ungeprägte Folie (4) eine Dicke vom 0,2 bis 1,5 mm, bervorzugt 0,5 bis 1,00 mm, aufweist.

## Claims

1. A method of manufacturing plastics mouldings with a surface coating having a decorative structure, the mouldings being covered by a foil by inserting a non-embossed deep-drawable foil into a mould which is structured on at least parts of its inner surface, and introducing a free-flowing plastics into the mould so that the foil is pressed against the structured regions of the surface of the mould, characterised in that, before the free-flowing plastics is introduced, the structured regions are heated, preferably to a temperature above the softening point of the foil, and the free-flowing plastics is then introduced at a pressure of about 10 to 130 bar, preferably about 50 to 100 bar, as a result of which the foil is deep-drawn.

2. A method according to claim 1, characterised in that, simultaneously or after the injection of the molten thermoplastics (6), a gas is introduced into the molten plastics (6) and the pressure in the mould is maintained until the plastics (6) has solidified and is self-supporting.

3. A method according to claim 1 or 2, characterised in that the non-embossed foil (4) is of thermoplastics based on PVC and/or ABS.

4. A method according to any of claims 1 to 3, characterised in that the thermoplastics (6) for injection into the mould (1) is based on polypropylene and/or ABS.

5. A method according to any of claims 1 to 5, characterised in that the side of the non-embossed foil (4) facing the plastics (6) is coated with cellular material, the softening point of the cellular material being higher than the temperature at which the molten plastics (6) is injected.

6. A method according to any of claims 1 to 6, characterised in that the non-embossed foil (4) has a thickness of 0.2 to 1.5 mm, preferably 0.5 to 1.00 mm.

## Revendications

1. Procédé de fabrication de pièces moulées munies d'un revêtement superficiel présentant une structure superficielle décorative, selon lequel le revêtement est réalisé à partir d'une feuille lisse, déformable par emboutissage, qui est introduite dans un moule présentant au moins sur des parties de sa surface interne une structure décorative, l'introduction de matière fluide dans le moule appliquant sous pression la feuille contre les parties structurées du moule, caractérisé en ce que ces parties structurées sont chauffées avant utilisation de la matière, de préférence à une température dépassant celle de ramollissement de la matière, la matière fluide étant ensuite élevée à une pression de 10 à 130 bars, de préférence 50 à 10 bars environ, provoquant la déformation de la feuille par emboutissage profond.

2. Procédé selon la revendication 1, caractérisé en ce que simultanément ou à la suite de l'injection de la matière thermoplastique (6) fondue, un gaz est introduit dans cette matière plastique fondue, la pression étant maintenue à l'intérieur du moule jusqu'à rigidification autoportante de la pièce moulée.

3. Procédé selon la revendication 1 ou 2, caractérisé en ce que la feuille lisse (4) est faite d'une matière plastique à base de PVC et/ou d'ABS.

4. Procédé selon une des revendications 1 à 3, caractérisé en ce que pour injection dans le moule, on utilise comme matière thermoplastique (6) une matière à base de polypropylène et/ou d'ABS.

5. Procédé selon une des revendications 1 à 4, caractérisé en ce que la feuille lisse (4) et munie, sur sa face en regard de la matière (6) du noyau, d'une doublure en mousse dont la température de ramollissement est supérieure à la température d'injection de la matière thermoplastique fondue (6).

6. Procédé selon une des revendications 1 à 5, caractérisé en ce que la feuille lisse (4) a une épaisseur comprise entre 0,2 et 1,5 mm, de préférence entre 0,5 et 1mm.
